# FASCICULE DE BREVET EUROPEEN

(11) **EP 4 481 510 B1**
(45) Date de publication et mention de la délivrance du brevet: **20.08.2025**
(21) Numéro de dépôt: 24204265.3
(22) Date de dépôt: 03.12.2019
(51) Int. Cl.: G04B 17/06, G04B 18/08

(54) **AXE DE BALANCIER**
UNRUHWELLE
BALANCE AXLE

(30) Priorité: 06.12.2018 CH 15042018
(43) Date de publication de la demande: 25.12.2024
(62) Demande divisionnaire de: 19213301.5
(73) Titulaire: Richemont International S.A., 1752 Villars-sur-Glâne (CH)
(72) Inventeur: TOBENAS BORRON, Susana del Carmen, 2017 Boudry (CH); GOUIDER, Mohamed, 2000 Neuchâtel (CH); POLLET-VILLARD, Aurélien, 25300 Pontarlier (FR)
(74) Mandataire: Patentsmith SA

(56) Documents cités:
- EP-A1- 2 757 423
- CH-A4- 1 025 860
- DE-B- 1 207 289

## Description

### Domaine technique

La présente invention se rapporte au domaine de l'horlogerie. Elle concerne, plus particulièrement, un axe de balancier,

### Etat de la technique

Dans un mouvement mécanique d'horlogerie, le balancier-spiral est un élément important dans la détermination de la régularité de la marche. Le balancier spiral est assemblé sur un arbre, appelé axe de balancier, pivotant dans des paliers. La qualité du pivotement a une grande influence sur la performance du mouvement, en termes de précision, de rendement et de durabilité notamment.

La réalisation d'axes de balancier de manière industrielle est particulièrement complexe. En effet, l'axe est décolleté dans une barre, dont le matériau doit être suffisamment tendre pour être usiné de manière précise et rapide, sans induire d'usure précoce des outils de coupe. Mais les zones interagissant avec les paliers, appelées pivot, doivent également être suffisamment dures, pour résister à l'usure du fonctionnement. Par ailleurs, l'état de surface des pivots doit être particulièrement travaillé et il est aujourd'hui obtenu par des opérations de roulage, qui nécessitent un matériau présentant une dureté d'au moins 600HV (Vickers).

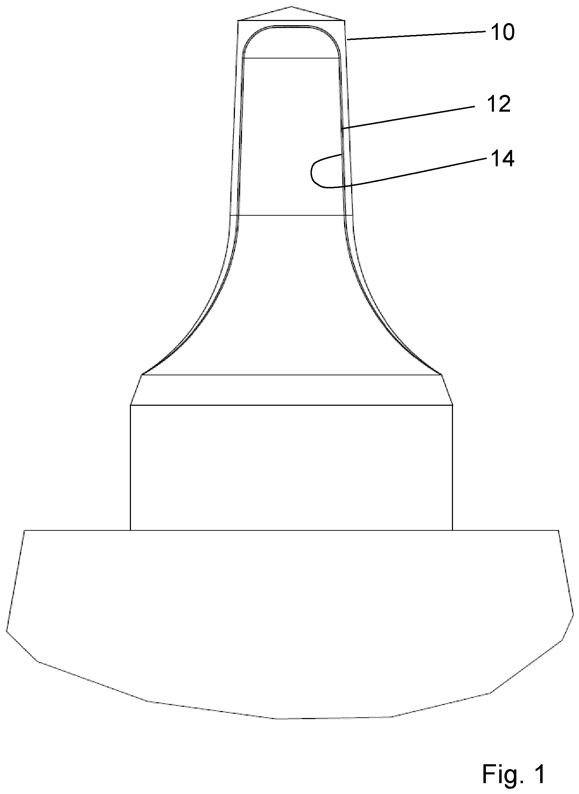

Ces opérations de roulage permettent non seulement d'obtenir l'état de surface souhaité, mais également les formes requises pour les pivots avec une précision dimensionnelle bien maitrisée, avec une tolérance de l'ordre du micron. Le décolletage est donc effectué selon des cotes intermédiaires, qui tiennent compte de la matière enlevée lors du roulage. Sur la figure 1, on a représenté selon la ligne 10, la forme d'un axe issu du décolletage, et selon la ligne 12, sa forme après roulage. Le roulage permet d'obtenir la géométrie recherchée pour les pivots. Eventuellement, une opération supplémentaire de finition tribologique, tel qu'un polissage est encore effectuée. Cette dernière entraîne une abrasion de matière supplémentaire et permet d'obtenir les cotes selon la ligne 14, qui sont les cotes définitives.

Le matériau choisi doit donc être aisément décolletable, et être ensuite apte à être durci par des traitements de trempe ou de revenu. L'usinabilité d'un matériau peut être corrélée directement à son effort spécifique de coupe, mesuré par les fabricants par le paramètre Kc, donné généralement en N/mm² ou MPa. On utilise généralement des aciers martensitiques au carbone incluant du plomb et des sulfures de manganèse pour améliorer leur usinabilité. Un acier de ce type utilisé en horlogerie est connu sous la référence 20AP.

Bien que donnant satisfaction en termes d'usinabilité et d'état de surface, les aciers actuellement utilisés présentent l'inconvénient d'être sensibles à une exposition à un champ magnétique, ce qui peut ensuite perturber la marche de la montre.

Actuellement, les horlogers cherchent donc des alliages alternatifs, présentant des propriétés similaires à celles des aciers martensitiques, à savoir une bonne usinabilité, une aptitude au durcissement par des traitements divers, et qui soient autant amagnétiques que possible. L'un des buts de ces tentatives est de conserver les techniques d'usinage jusqu'ici maitrisées, pour reproduire les formes de pivot éprouvées et donnant satisfaction.

Les documents CH1025860A4 et DE1207289B divulguent des arbres de balancier fabriqués dans des alliages de fer, nickel et chrome.

Contrairement à l'approche actuellement suivie, la présente invention vise à changer de paradigme et a pour but de proposer un nouvel axe de balancier.

### Divulguation de l'invention

Un aspect de l'invention porte sur un axe de balancier tel que défini dans la revendication annexée.

### Brève description des dessins

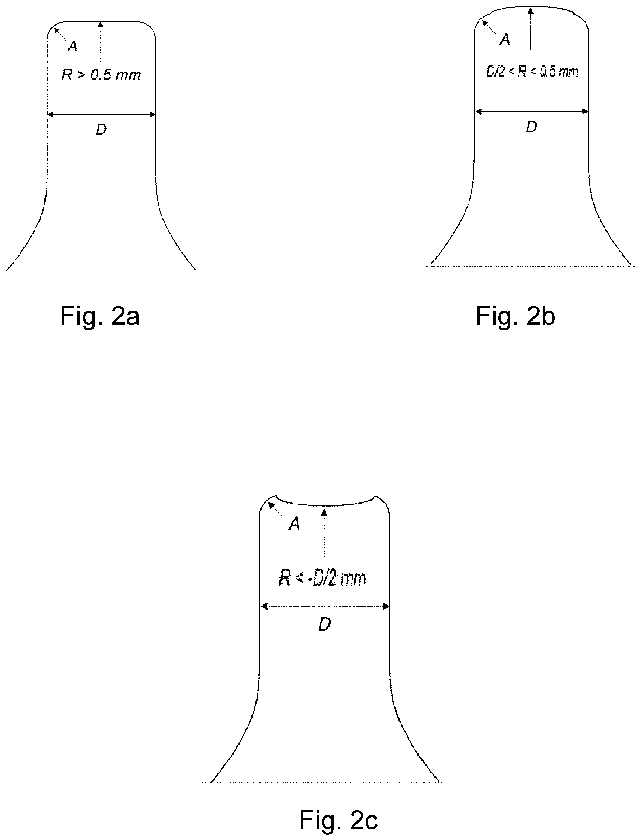

La figure 1 annexée représente les géométries d'un axe de balancier au cours de sa réalisation selon un procédé traditionnel, tandis que les figures 2a, 2b et 2c proposent des géométries d'axe de balancier réalisés par le procédé selon l'invention.

### Mode de réalisation de l'invention

De récents développements technologiques ont proposé d'utiliser une nouvelle technique de fabrication, basée sur une machine à commande numérique 5 axes, dont l'actuateur est équipé d'un laser à impulsions ultracourtes (USP). Ce type de laser produit un spot laser uniforme de l'ordre de 25 µm. Ce laser est utilisé pour irradier une pièce à usiner, sous la forme d'un barreau mis en rotation dans un organe de préhension rotatif, à l'instar d'une décolleteuse.

Une très grande quantité d'énergie est appliquée sur la pièce pendant une courte période. La fonte ou les changements thermiques ne se produisent pas parce que le matériau est vaporisé instantanément. De plus, le laser est mis en rotation avec ce qu'on appelle une optique de trépanation. Ainsi, des faisceaux avec des angles différents peuvent être envoyés sur la pièce, en modifiant automatiquement le diamètre de rotation et l'angle d'incidence.

En conséquence, grâce aux directions que peut prendre le faisceau, on peut envisager de réaliser des axes et des pivots avec des formes conventionnelles, c'est-à-dire des formes actuellement réalisées par décolletage et roulage. D'autres formes sont également possibles, qui ne seraient pas réalisables par décolletage, ni par roulage. Les géométries visées sont obtenues directement lors de l'étape d'usinage laser, sans opération de roulage.

Ainsi, à titre d'exemple, la figure 2 donne trois possibilités, respectivement aux figures 2a, 2b et 2c.

L'extrémité du pivot illustré en 2a est plate. Elle se décrit comme un cylindre circulaire droit de diamètre D compris entre 50 et 100 µm (Symétrie axiale). La base de ce cylindre présente un arc de cercle de 90° de rayon A, compris entre 5 et 25 µm, partant de la génératrice du cylindre. De façon tangentielle et continue, un rayon de courbure R supérieure à 0.5 mm, prolonge le rayon A jusqu'au centre de la base du cylindre.

L'extrémité du pivot illustré en 2b est convexe. Elle se décrit comme un cylindre circulaire droit de diamètre D compris entre 50 et 100 µm (Symétrie axiale). La base de ce cylindre présente un arc de cercle de 90°, de rayon A compris entre 5 et 25 µm, partant de la génératrice du cylindre. De façon tangentielle et continue, un rayon de courbure R compris entre 0.1 et 0.5 mm, plus généralement compris entre D/2 et 0.5mm, prolonge le rayon A jusqu'au centre de la base du cylindre.

L'extrémité du pivot illustré en 2c est concave. Elle se décrit comme un cylindre circulaire droit de diamètre D compris entre 50 et 100 µm (Symétrie axiale). La base de ce cylindre présente un arc de cercle de 90°, de rayon A compris entre 5 et 25 µm, partant de la génératrice du cylindre. De façon tangentielle et continue, un rayon de courbure R inférieure à -D/2, de préférence inférieur à -0.35 mm, prolonge le rayon A jusqu'au centre de la base du cylindre.

Les exemples donnés ci-dessus ne sont pas limitatifs et les formes décrites entre la partie cylindrique et la partie plate, respectivement convexe, respectivement concave, peuvent être adaptées, ainsi que les rayons de courbure des parties convexe, respectivement concave.

De manière particulièrement avantageuse et inattendue, il a été observé que cette technologie de décolletage laser permettait d'obtenir un très bon contrôle du procédé et une fabrication de pièces dans les dimensions utilisées pour des pivots horlogers, avec non seulement des tolérances très réduites mais également des états de surface remarquables.

Compte tenu des déplacements relatifs de la barre à usiner et de la tête de trépanation, l'obtention d'une précision suffisante apparaissait a priori comme une gageure. Pour fixer les idées, le diamètre de l'axe au niveau du pivot est d'environ 50 µm et la tolérance est de l'ordre du µm.

Pour ce qui concerne les états de surface obtenus, ils sont meilleurs que ceux obtenus après un décolletage conventionnel. En sortie de décolletage, on mesure une rugosité Ra comprise entre 0.025 et 0.1 µm après usinage laser, alors qu'elle est de 0.2 µm après décolletage conventionnel. La qualité de l'état de surface permet de se passer de roulage ultérieur.

Ainsi, pour obtenir un état de surface conforme aux spécifications requises, une simple étape de finition tribologique/polissage, pour affiner davantage l'état de surface. Ce type d'opération est effectué en vrac, par agitation dans un milieu chargé de particules abrasives. On peut donc traiter un grand nombre de pièces, de manière très efficiente. On n'observe pas de changement de géométrie au cours de cette opération, mais seulement une réduction homogène des dimensions, de quelques µm, en fonction de la durée de l'opération.

De manière encore plus intéressante, des essais ont été réalisés avec des matières non utilisées pour ce genre d'applications, ces matières étant connues pour leur faible usinabilité avec des outils traditionnels, de type burin de décolletage. En effet, ces matières présentent des efforts spécifiques de coupe supérieurs ou égaux à 2400 N/mm² et entrainent une usure rapide des outils de coupe en carbure, ce qui les rend inutilisables industriellement. De plus, au vu des faibles dimensions des axes et des pivots, les contraintes mécaniques imposées lors du décolletage rendent quasi impossibles la réalisation de pièces dans ce type de matière.

Ainsi, des essais ont notamment été effectués avec des alliages de la famille des Inconel comprenant au moins 50% de Nickel, entre 13 et 30% de Chrome et des éléments choisis parmi le Fe, Mo, Nb, Ta, Co, Mn, Cu, AI, Ti, Si, C, S, P et B. Ces alliages présentent l'avantage d'être amagnétiques. Ainsi, l'invention concerne un axe de balancier homogène réalisé en un tel alliage amagnétique. Le terme « homogène » signifie que le matériau a partout les mêmes propriétés mécaniques. Bien que cela ne soit pas exclu de la protection, l'axe selon l'invention n'a pas besoin de recevoir un revêtement externe pour modifier ses propriétés tribologiques.

Plus particulièrement, les alliages utilisés peuvent être un inconel 718. L'alliage comprend entre 50 et 55% de Nickel, entre 17 et 21% de Chrome, entre 2,8 et 3,3% de Molybdène, entre 4,75 et 5,50% de Niobium, entre 0 et 1,0% de Cobalt, entre 0 et 0,35% de Manganèse, entre 0 et 0,30% de Cuivre, entre 0,20 et 0,80% d'Aluminium, entre 0,65 et 1,15% de Titane, entre 0 et 0,35% de Silicium, entre 0 et 0,08% de Carbone, entre 0 et 0,015% de Souffre, entre 0 et 0,015% de Phosphore, et entre 0 et 0,006% de Bore, et le solde de Fer.

Plus généralement, on peut utiliser différentes matières présentant un effort spécifique de coupe supérieur ou égal à 2400 N/mm². Les alliages choisis peuvent éventuellement être traités thermiquement avant leur mise en forme, par exemple pour modifier certaines propriétés, comme leur dureté. Ces traitement thermiques, appelés vieillissements pour ce type d'alliage, sont effectués avant l'usinage laser, ce qui permet d'éviter tout changement dimensionnel pouvant survenir lors des traitements thermiques.

Ainsi, les matières suivantes peuvent être utilisées :
- ISO P : Aciers fortement alliés (> 5% d'éléments d'alliage), recuits, trempés et revenus ;
- ISO S : Superalliages réfractaires hors titane (Base fer, base nickel, base Cobalt), recuits, vieillis, coulés ;
- Aciers inoxydables austénitiques : 1.4472 et Biodur^{®}108, dont il a été démontré par des essais que leur effort spécifique de coupe Kc est supérieur ou égal 2400 N/mm² (bien que faisant partie du groupe ISO M) ;
- ISO H : Aciers trempés, trempés et revenus, fonte en coquille (coulée ou coulée et vieillie).

Les alliages mentionnés étant particulièrement durs, éventuellement après un traitement thermique ad-hoc, on peut donc se passer d'étapes de durcissement généralement mises en œuvre après un usinage traditionnel. En effet, avec un décolletage traditionnel, les opérations de traitements thermiques de type trempe ou revenu, sont effectués après l'usinage, ce qui nécessite de prendre en compte les contraintes et déformations thermiques subies.

Grâce aux possibilités offertes par l'usinage laser et grâce à la précision que cette technique permet d'obtenir, on peut donc usiner l'axe de balancier, y-compris les pivots, avec la géométrie finale. Une simple étape de finition tribologique ou polissage est préférentiellement effectuée, en conservant la géométrie définie, c'est-à-dire en conservant les angles ou rayons, une simple contraction par enlèvement de matière régulier pouvant être observée. Le procédé est donc beaucoup mieux maitrisé.

On a ainsi pu réaliser, par décolletage laser, des axes de balancier, y compris les pivots, dans différentes matières présentant des efforts spécifiques de coupes supérieurs ou égaux à 2400 N/mm2. De manière surprenante, le décolletage laser tel que décrit ci-dessus, permet d'obtenir les formes recherchées avec des précisions requises et des états de surface particulièrement bons.

On souligne que les pivots sont mis en forme lors de l'opération de décolletage. Toutes les caractéristiques géométriques de l'axe, y compris les pivots, sont bien réalisées avec une dispersion extrêmement faible. Les dimensions obtenues tiennent compte, le cas échéant, de l'enlèvement de matière lié à une étape de finition, de type polissage ou autre.

Les axes peuvent être utilisés sans ajout d'un revêtement externe. On obtient ainsi des axes homogènes, en termes de matériau et de propriétés.

Un aspect intéressant du procédé de fabrication, est que le laser peut travailler sur toute la longueur de l'axe, hormis le bout de pivot qui relie l'axe à la barre. En modulant les paramètres du laser, on peut ainsi mettre en forme l'ensemble des zones de l'axe, en affinant progressivement l'état de surface. A la différence d'un procédé de décolletage traditionnel où l'axe de balancier est réalisé par section longitudinale, au fur et à mesure de l'avance de la barre, le laser réalise l'axe en travaillant toute sa longueur et en réduisant les diamètres, puis en affinant les états de surface, de manière progressive.

Typiquement, au cours des différentes étapes d'usinage, les paramètres du laser pourront varier dans les gammes suivantes :
- Puissance moyenne : entre 10 et 100 W ;
- Energie par pulse : entre 20 et 400 µJ ;
- Fréquence : entre 100 et 1000 kHz ;
- Durée d'impulsion : entre 500 fs et 20 ps.

Le procédé comprend les blocs d'étapes suivants, chacun comportant une pluralité d'étapes, dont le détail peut être modifié en fonction du savoir-faire de l'homme du métier et des spécificités de la machine utilisée.
- Ebauche de la barre : consiste à réduire le diamètre de la barre pour l'amener à un diamètre de 1 à 3mm,
- Profilage de l'axe de balancier : consiste à donner la forme générale de l'axe de balancier (plateau, rivure, géométrie générale...),
- Piqûre de la rivure : consiste à réaliser la piqûre, ce qui nécessite un positionnement oblique de l'axe, pour réaliser un usinage concave sur le plateau,
- Mise en forme des extrémités des pivots : consiste à réaliser l'état de surface final sur la partie extrémale du pivot.

La réalisation de cette dernière étape par le laser, nécessite que les extrémités soient libres d'accès pour le faisceau. En conséquence, le procédé de fabrication comprend :
- une première étape d'usinage, particulièrement de mise en forme, d'une première extrémité de l'axe tandis que la deuxième extrémité est tenue par la machine, le cas échéant par l'intermédiaire de la barre,
- une deuxième étape de reprise par la machine de l'axe par la première extrémité précédemment usinée, et
- une troisième étape d'usinage, particulièrement de mise en forme, de la deuxième extrémité tandis que la première extrémité est tenue par la machine.

Entre la première et la deuxième étape, l'axe est séparé par tronçonnage du reste de la barre, ce tronçonnage étant effectué au niveau de la deuxième extrémité. Avantageusement, le tronçonnage est effectué par le laser.

De manière avantageuse, l'utilisation d'une tête laser combinée avec une machine à commande numérique 5 axes, permet de réaliser toutes formes sur l'axe, y-compris des formes qui ne sont pas de révolution, dès lors que la rotation de la barre est arrêtée.

## Revendications

1. Axe de balancier homogène réalisé en un alliage amagnétique comprenant, en pourcentage massique, entre 50 et 55% de Nickel, entre 17 et 21% de Chrome, entre 2,8 et 3,3% de Molybdène, entre 4,75 et 5,50% de Niobium, entre 0 et 1,0% de Cobalt, entre 0 et 0,35% de Manganèse, entre 0 et 0,30% de Cuivre, entre 0,20 et 0,80% d'Aluminium, entre 0,65 et 1,15% de Titane, entre 0 et 0,35% de Silicium, entre 0 et 0,08% de Carbone, entre 0 et 0,015% de Souffre, entre 0 et 0,015% de Phosphore, et entre 0 et 0,006% de Bore, et le solde de Fer.

## Patentansprüche

1. Homogene Unruhachse aus einer nichtmagnetischen Legierung, die in Massenprozent zwischen 50 und 55 % Nickel, zwischen 17 und 21 % Chrom, zwischen 2,8 und 3,3 % Molybdän, zwischen 4,75 und 5,50 % Niob, zwischen 0 und 1,0 % Kobalt, zwischen 0 und 0,35 % Mangan, zwischen 0 und 0,30 % Kupfer, zwischen 0,20 und 0,80 % Aluminium, zwischen 0,65 und 1,15 % Titan, zwischen 0 und 0,35 % Silizium, zwischen 0 und 0,08 % Kohlenstoff, zwischen 0 und 0,015 % Schwefel, zwischen 0 und 0,015 % Phosphor und zwischen 0 und 0,006 % Bor, Rest Eisen.

## Claims

1. Homogeneous balance shaft made of a non-magnetic alloy comprising, in mass percent, between 50 and 55% nickel, between 17 and 21% chromium, between 2.8 and 3.3% molybdenum, between 4.75 and 5.50% niobium, between 0 and 1.0% cobalt, between 0 and 0.35% manganese, between 0 and 0.30% copper, between 0.20 and 0.80% aluminum, between 0.65 and 1.15% titanium, between 0 and 0.35% silicon, between 0 and 0.08% carbon, between 0 and 0.015% sulfur, between 0 and 0.015% phosphorus, and between 0 and 0.006% boron, with the remainder being iron.
